(19) Europäisches Patentamt
European Patent Office
Office européen des brevets

(11) **EP 2 999 602 B1**

(12) **EUROPÄISCHE PATENTSCHRIFT**

(45) Veröffentlichungstag und Bekanntmachung des Hinweises auf die Patenterteilung:
**30.08.2017 Patentblatt 2017/35**

(21) Anmeldenummer: **14718553.2**

(22) Anmeldetag: **15.04.2014**

(51) Int Cl.:
*B60C 9/00* (2006.01)   *B60C 9/20* (2006.01)
*D02G 3/48* (2006.01)   *B60C 9/22* (2006.01)
*B29D 30/38* (2006.01)

(86) Internationale Anmeldenummer:
**PCT/EP2014/057564**

(87) Internationale Veröffentlichungsnummer:
**WO 2014/187615 (27.11.2014 Gazette 2014/48)**

(54) **FAHRZEUGLUFTREIFEN UND VERWENDUNG EINES GARNES AUS EINEM TEXTILEN MATERIAL**

PNEUMATIC TYRE AND USE OF A TEXTILE MONOFILAMENT IN SAID TYRE

PNEUMATIQUE ET USAGE D'UN MONOFILAMENT EN FORME TEXTILE DANS CE PNEUNMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2013 DE 102013105163**

(43) Veröffentlichungstag der Anmeldung:
**30.03.2016 Patentblatt 2016/13**

(60) Teilanmeldung:
**16190732.4 / 3 147 138**

(73) Patentinhaber: **Continental Reifen Deutschland GmbH**
**30165 Hannover (DE)**

(72) Erfinder:
• **REESE, Wolfgang**
**31228 Peine (DE)**
• **JUSTINE, Carole**
**31535 Scharrel (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
EP-A1- 2 781 371       DE-A1-102007 040 674
DE-A1-102010 017 786   GB-A- 2 172 251

EP 2 999 602 B1

**Beschreibung**

Die Erfindung betrifft einen Fahrzeugluftreifen in Radialbauart mit einer Radialkarkasse, einem profilierten Laufstreifen, einem Gürtel und einer diesen bedeckenden ein- oder mehrlagigen Gürtelbandage mit in Umfangsrichtung der Reifens verlaufenden Festigkeitsträgern, welche aus mindestens einem getwisteten Garn aus Polyamid 6.6 bestehen.

Üblicher Weise bestehen die Korde in der Gürtelbandage von Fahrzeugluftreifen für Personenkraftwagen aus vertwisteten Garnen beispielsweise aus Polyamid 6.6 mit 940 dtex oder 1400 dtex. Die Korde weisen daher einen relativ großen Durchmesser auf, wodurch auch die Bandagenlagenstärke im Reifen relativ groß ist, was letztlich im Betrieb des Reifens einen Wärmeaufbau bewirkt, welcher den Rollwiderstand des Reifens erhöht.

Ein Reifen der eingangs genannten Art ist beispielsweise aus der DE 10 2007 040 674 A1 bekannt. Der Reifen weist eine mit einem Nylonkord verstärkte Gürtelbandage auf, wobei der Nylonkord aus zwei zusammengedrehten Garnen mit je einer Feinheit von 470 dtex besteht. Jedes der beiden Garne kann einzeln mit 300 t/m bis 500 t/m verdreht sein.

Die EP 2 781 371 A, welche ein Stand der Technik gemäß Artikel 54 (3) EPÜ ist, offenbart eine Gürtelbandage mit Festigkeitsträgern, welche ein Vielzahl von Monogamen aus Basaltfasern aufweist. Die Festigkeitsträger sind insbesondere Korde aus zumindest zwei Garnen, wobei mindestens ein Garn aus Basaltfasern und mindestens ein Garn aus einem anderen Material, beispielsweise PA 6.6 besteht. Die Garne können ein Feinheit von 250 dtex bis 5000 dtex aufweisen.

Aus der GB 2 172 251 A1 ist ein Fahrzeugluftreifen mit einer Gürtelbandage bekannt, deren Festigkeitsträger monofile Garne oder aus monofilen Garne bestehend Korde sind, wobei die Garne jeweils eine Feinheit von mindestens 250 dtex aufweisen und selbst nicht verdreht, d.h. nicht getwistet, sind. Die DE 10 2010 017 786 A1 offenbart einen weiteren Fahrzeugluftreifen mit einer Gürtelbandage, welche als Festigkeitsträger zumindest Fasern aus Polyamid 10.10 enthält, die vorzugsweise Multifilamantgarne einer Feinheit von 100 dtex bis 5000 dtex sind.

Aus der DE 10 2012 017 786 A1 ist ein Fahrzeugluftreifen bekannt, welcher in der Gürtelbandage als Festigkeitsträger einen Kord aus zumindest zwei miteinander endverdrehten Multifilamentgarnen enthält, welche aus Polyamid 10.10 bestehen, wobei die einzelnen Multifilamentgarne eine Feinheit von jeweils 250 dtex bis 4000 dtex aufweisen. Polyamid 10.10 wird dabei gegen das üblicherweise für Garne verwendete Polyamid 6.6 ausgetauscht, da es sich durch eine hohe mechanische Festigkeit und Beständigkeit gegenüber Chemikalien auszeichnet. Aus der EP 1 475 248 B1 ist ein Fahrzeugluftreifen bekannt, dessen Gürtelbandage Hybridkorde enthält, welche aus einem ersten Garn mit einem hohen Elastizitätsmodul von zumindest 25.000 N/mm², insbesondere aus Aramid, und einem zweiten Garn mit einem niedrigen Elastizitätmodul von nicht mehr als 15.000 N/mm², insbesondere Nylon einer Feinheit $\geq$ 940 dtex, die miteinander endverdreht sind, bestehen. Reifen mit einer Gürtelbandage mit derartigen Festigkeitsträgern sollen eine gute Hochgeschwindigkeitshaltbarkeit und ein verbessertes Abriebsverhalten aufweisen. Aus der WO 2012/069955 A1 ist es bekannt, in der Gürtelbandage eines Fahrzeugluftreifens einen Verstärkungskord zu verwenden, welcher ebenfalls ein Hybridkord ist, welcher aus zumindest einem Garn aus Polyamid 6.6 mit einer Feinheit von 600 dtex bis 2400 dtex und aus zumindest einem Garn aus Zellulosefasern besteht, wobei die Garne miteinander verdreht sind. Ein Fahrzeugluftreifen mit diesem Kord in der Gürtelbandage soll insgesamt in seiner Performance bei hohem Komfort verbessert sein.

Der Erfindung liegt die Aufgabe zu Grunde, bei einem Reifen der eingangs genannten Art mit einer einfachen Maßnahme den Rollwiderstand zu verringern und eine gute Highspeed-Performance sicherzustellen.

Gelöst wird die gestellte Aufgabe erfindungsgemäß dadurch, dass jedes getwistete Garn eine Feinheit $\leq$ 312 dtex aufweist.

Im Rahmen der Erfindung hat sich herausgestellt, dass Garne mit einer derart geringen Feinheit sehr gut dafür geeignet sind, die Festigkeitsträger in der Gürtelbandage von Fahrzeugluftreifen zu bilden. Derartige Festigkeitsträger lassen sich in höherer Dichte anordnen als die Festigkeitsträger aus dem Stand der Technik, sodass die Gürtelbandage eine sehr gute Hochgeschwindigkeitshaltbarkeit gewährleistet. Die Lagenstärke der Gürtelbandagelagen mit solchen Festigkeitsträgern ist geringer als von Bandagenlagen gemäß dem Stand der Technik, sodass das Gewicht des Reifens und der Wärme aufbau beim Abrollen des Reifens verringert werden. Dadurch wird der Rollwiderstand des Reifens reduziert.

Die Festigkeitsträger in der Bandagenlage können aus mehreren getwisteten Garnen bestehende Korde sein, welche eine der üblichen Konstruktionen 1×1, 1×2 oder 1 ×3 aufweisen können.

Als Festigkeitsträger in der Gürtelbandage eignen sich Korde der Konstruktion 1×1 mit einem Twistfaktor $\alpha$ von 10 bis 80, vorzugsweise 30 bis 50, ferner Korde der Konstruktionen 1x2 oder 1×3 mit einem Twistfaktor $\alpha$ von 50 bis 300, vorzugsweise 100 bis 200, wobei

$$\alpha = t/m \times \sqrt{\frac{dtex}{10000}},$$ mit t/m: Twists pro Meter und dtex: dtex des gesamten Kordes.

Um eine gute Gummipenetration zwischen die Korde bzw. Festigkeitsträger sicherzustellen, sollten die Festigkeitsträger innerhalb einer Bandagenlage bzw. von Bandagenlage zu Bandagenlage unter einem lichten Abstand von mindestens 0,1 mm angeordnet sein.

Die Erfindung betrifft ferner die Verwendung eines getwisteten Garnes aus Polyamid 6.6 mit einer Feinheit $\leq$ 312 dtex als Festigkeitsträger oder zur Herstellung von Verstärkungskorden für zumindest eine Bandagenlage, welche den Gürtel eines Fahrzeugluftreifens in Radialbauart bedeckt.

Dabei kann im Rahmen der Erfindung vorzugsweise ein handelsübliches Garn aus Polyamid 6.6, insbesondere eines mit einer Feinheit von 312 dtex oder 235 dtex verwendet werden.

Weitere Merkmale, Vorteile und Einzelheiten der Erfindung ergeben sich aus der nachfolgenden Beschreibung.

Erfindungsgemäße Fahrzeugluftreifen sind Reifen in Radialbauart, welche insbesondere für Personenkraftwagen vorgesehen sind. Diese Fahrzeugluftreifen weisen üblicherweise neben einer Radialkarkasse, die in Wulstbereichen durch Umschlingen zugfester Wulstkerne verankert ist, einen radial außen befindlichen, eine Profilierung aufweisenden Laufstreifen, ferner einen zwischen dem Laufstreifen und der Radialkarkasse befindlichen Gürtel aus zumindest einer Gürtellage mit gummierten Festigkeitsträgern und eine zwischen dem Laufstreifen und dem Gürtel angeordnete Gürtelbandage auf. Die ein- oder mehrlagig ausgeführte Gürtelbandage bedeckt den Gürtel und überdeckt die seitlichen Ränder der Gürtellagen. Gürtelbandagenlagen werden insbesondere als Spulbandage hergestellt, indem zumindest ein Streifen aus in eine unvulkanisierte Kautschukmischung eingebetteten Festigkeitsträgern, die in Streifenlängsrichtung und im fertigen Reifen in Umfangsrichtung des Reifens verlaufen, spiralig auf den Gürtel gewickelt wird. Die Wicklung kann derart erfolgen, dass die einzelnen Windungen des Streifens Stoß an Stoß liegen oder sich zum Teil überlappen. Des Weiteren ist eine Lückenspulung denkbar, bei der zwischen den Windungen ein kleiner Abstand verbleibt. Die Festigkeitsträger sind bei einer Ausführungsform Korde, welche aus in sich verdrehten Garnen bestehen, wobei mehrere, beispielsweise zwei oder drei Garne zu einem Kord verdreht sind. Die Festigkeitsträger können Einzelkorde sein, welche in einem geringen Abstand zueinander angeordnet zu einem Streifen gummiert werden. Die Festigkeitsträger können auch die Kettfäden eines Gewebes sein, welches kalandriert wird und anschließend in Streifen geschnitten wird. Die Festigkeitsträger können bei einer weiteren Ausführungsform auch in sich verdrehte Garne sein. Der minimale Abstand der Festigkeitsträger in den Kautschukmischungsstreifen beträgt 0,1 mm, vorzugsweise 0,2 mm. Das Garn, welches in sich verdreht wird, besteht aus einem textilen Material wie Polyamid 6.6 (Nylon 6.6) mit einer Feinheit ≤ 312 dtex. Von den am Markt derzeit erhältlichen Garnen aus Polyamid 6.6 kommen daher beispielsweise Garne mit 312 dtex oder 235 dtex in Frage. Die mit solchen Garnen bzw. mit Korden aus solchen Garnen hergestellten Materialstreifen können wesentlich dünner ausgeführt werden als die Materialstreifen für Spulbandagen gemäß dem Stand der Technik, die beispielsweise Korde enthalten, die aus Garnen aus Polyamid 6.6 mit 940 dtex oder 1400 dtex hergestellt sind. Dadurch, dass die Dichte der Festigkeitsträger bzw. Korde in den Materialstreifen für die Spulbandage als auch in den aus diesen hergestellten Gürtelbandagenlagen wesentlich größer gewählt werden kann als in Materialstreifen bzw. Gürtelbandagenlagen nach dem Stand der Technik, weisen erfindungsgemäße Bandagenlagen eine Festigkeit auf, die mit jener von Gürtelbandagelagen gemäß dem Stand der Technik vergleichbar ist. Die Dicke der erfindungsgemäßen Bandagenlagen und daher ihr Gewicht sind jedoch geringer als jene von Bandagenlagen gemäß dem Stand der Technik, wodurch auch das Gewicht des Fahrzeugluftreifens verringert wird. Damit geht ein geringerer Wärmeaufbau im Gürtel bzw. Laufstreifenbereich des Reifens, insbesondere bei höheren Geschwindigkeiten, einher, wodurch der Rollwiderstand des Reifens reduziert wird.

Beim erfindungsgemäßen Einsatz des Garnes wird dieses getwistet als Kord in einer der Konstruktionen 1×1, 1×2 oder 1x3 verwendet. Der lichte Abstand der einzelnen Festigkeitsträger bzw. Korde in der bzw. den Bandagenlage(n) im Reifen sollte mindestens 0,1 mm betragen, ebenso der lichte Abstand zwischen den Festigkeitsträgern bzw. Korden von übereinander angeordneten Bandagenlagen. Durch diesen Mindestabstand wird eine gute Gummipenetration zwischen die einzelnen Festigkeitsträger sichergestellt und ein gegenseitiger Kontakt der Festigkeitsträger vermieden.

Für Korde gemäß der Erfindung kann ein Twistfaktor α, wie folgt definiert werden:

$$\alpha = t/m \times \sqrt{\frac{dtex}{10000}}$$

mit t/m: Twists pro Meter und

dtex: die Summe des dtex sämtlicher im Kord enthaltenen Garne, somit dtex des gesamten Kordes.

Der Twistfaktor α für 1×1 Konstruktionen sollte 10 bis 80, vorzugsweise 30 bis 50, betragen, der Twistfaktor α von 1x2- und 1x3- Konstruktionen 50 bis 300, vorzugsweise 100 bis 200.

Garne bzw. Festigkeitsträger gemäß der Erfindung können im Reifen zur Herstellung der Gürtelbandage aus einem in Streifen geschnittenen, kalandrierten Gewebe, aus einem in Streifen geschnittenen, extrudierten Material oder auch als gummierter Einzelkord verarbeitet werden. Möglich ist auch ein Einsatz als klebrig imprägnierter Einzelkord, der somit ohne Gummierung unmittelbar auf den Rohreifen bzw. das Gürtelpaket gespult wird.

**Patentansprüche**

1. Fahrzeugluftreifen in Radialbauart mit einer Radialkarkasse, einem profilierten Laufstreifen, einem Gürtel und einer diesen bedeckenden ein- oder mehrlagigen Gürtelbandage mit in Umfangsrichtung der Reifens verlaufenden Festigkeitsträgern, welche aus mindestens einem getwisteten Garn bestehen, wobei jedes Garn aus Polyamid 6.6 besteht, **dadurch gekennzeichnet, dass** jedes getwistete Garn eine Feinheit ≤ 312 dtex aufweist.

2. Fahrzeugluftreifen nach einem der Anspruch 1, **dadurch gekennzeichnet, dass** die Festigkeitsträger aus mehreren Garnen bestehende Korde sind.

3. Fahrzeugluftreifen nach Anspruch 2, **dadurch gekennzeichnet, dass** die Korde eine der Konstruktionen 1×1, 1×2 oder 1×3 aufweisen.

4. Fahrzeugluftreifen nach Anspruch 3, **dadurch gekennzeichnet, dass** Korde der Konstruktion 1×1 einen Twistfaktor α von 10 bis 80, vorzugsweise 30 bis 50, aufweisen, wobei $\alpha = t/m \times \sqrt{\dfrac{dtex}{10000}}$, mit t/m: Twists pro Meter und dtex: dtex des gesamten Kordes.

5. Fahrzeugluftreifen nach Anspruch 2, **dadurch gekennzeichnet, dass** Korde der Konstruktion 1x2 oder der Konstruktion 1x3 einen Twistfaktor α von 50 bis 300, vorzugsweise 100 bis 200, aufweisen, wobei $\alpha = t/m \times \sqrt{\dfrac{dtex}{10000}}$, mit t/m: Twists pro Meter und dtex: dtex des gesamten Kordes.

6. Fahrzeugluftreifen nach einem der Ansprüche 1 bis 5, **dadurch gekennzeichnet, dass** die Festigkeitsträger innerhalb einer Bandagenlage bzw. von Bandagenlage zu Bandagenlage unter einem lichten Abstand von mindestens 0,1 mm angeordnet sind.

7. Verwendung zumindest eines getwisteten Garnes aus Polyamid 6.6 mit einer Feinheit ≤ 312 dtex als Festigkeitsträger oder zur Herstellung von Verstärkungskorden, wobei jedes Garn der Verstärkungskorde aus Polyamid 6.6 besteht, für zumindest eine Bandagenlage, welche den Gürtel eines Fahrzeugluftreifens in Radialbauart bedeckt.

8. Verwendung nach Anspruch 7, **dadurch gekennzeichnet, dass** das Garn eine Feinheit von 312 dtex oder 235 dtex aufweist.

**Claims**

1. Pneumatic vehicle tire in a radial construction comprising a radial carcass, a profiled tread strip, a belt and a belt bandage covering said belt in one or more plies comprising strength members extending in the circumferential direction of said tire and consisting of at least one twisted yarn, wherein each yarn consists of nylon-6,6, **characterized in that** each twisted yarn has a fineness ≤ 312 dtex.

2. Pneumatic vehicle tire according to any of Claim 1, **characterized in that** the strength members are cords consisting of two or more yarns.

3. Pneumatic vehicle tire according to Claim 2, **characterized in that** the cords have one of the constructions 1 × 1, 1 × 2 or 1 × 3.

4. Pneumatic vehicle tire according to Claim 3, **characterized in that** cords of the construction 1 × 1 have a twist factor α of 10 to 80, preferably 30 to 50,

   wherein $\alpha = t / m \times \sqrt{\dfrac{dtex}{10\ 000}}$,

   where t/m is the number of twists per meter and dtex is the dtex of the entire cord.

5. Pneumatic vehicle tire according to Claim 2, **characterized in that** cords of the construction 1 × 2 or of the construction 1 × 3 have a twist factor α of 50 to 300, preferably 100 to 200, wherein

   $\alpha = t / m \times \sqrt{\dfrac{dtex}{10\ 000}}$, where t/m is the number of twists per meter and dtex is the dtex of the entire cord.

6. Pneumatic vehicle tire according to any of Claims 1 to 5, **characterized in that** the strength members are spaced apart within and between bandage plies by a clear distance of not less than 0.1 mm.

7. Use of at least one twisted yarn consisting of nylon-6,6 having a fineness ≤ 312 dtex as strength member or in the manufacture of reinforcement cords, wherein each yarn of the reinforcement cord consists of nylon-6,6, for at least one bandage ply covering the belt of a pneumatic vehicle tire in radial construction.

8. Use according to Claim 7, **characterized in that** the yarn has a fineness of 312 dtex or 235 dtex.

**Revendications**

1. Pneumatique de véhicule à structure radiale avec une carcasse radiale, une bande de roulement profilée, une ceinture et une nappe de ceinture en une ou plusieurs couche(s) recouvrant celle-ci avec des éléments de résistance s'étendant dans la direction périphérique du pneumatique, qui se composent d'au moins un fil tordu, dans lequel chaque fil se compose de polyamide 6.6, **caractérisé en ce que** chaque fil tordu présente une finesse ≤ 312 dtex.

2. Pneumatique de véhicule selon l'une quelconque de la revendication 1, **caractérisé en ce que** les éléments de résistance sont des cordes composées de plusieurs fils.

3. Pneumatique de véhicule selon la revendication 2, **caractérisé en ce que** les cordes présentent une des constructions 1x1, 1x2 ou 1x3.

4. Pneumatique de véhicule selon la revendication 3, **caractérisé en ce que** des cordes de la construction 1x1 présentent un facteur de torsion $\alpha$ de 10 à 80, de préférence de 30 à 50, dans laquelle

$$\alpha = {}^{t}\!/_{m} \times \sqrt{\frac{dtex}{10000}}$$ , avec t/m: torsions par mètre, et dtex: dtex de la corde entière.

5. Pneumatique de véhicule selon la revendication 2, **caractérisé en ce que** des cordes de la construction 1x2 ou de la construction 1x3 présentent un facteur de torsion $\alpha$ de 50 à 300, de préférence de 100 à 200, dans laquelle

$$\alpha = {}^{t}\!/_{m} \times \sqrt{\frac{dtex}{10000}}$$ , avec t/m: torsions par mètre, et dtex: dtex de la corde entière.

6. Pneumatique de véhicule selon l'une quelconque des revendications 1 à 5, **caractérisé en ce que** les éléments de résistance sont disposés à l'intérieur d'une couche de nappe ou d'une couche de nappe à l'autre avec une distance libre d'au moins 0,1 mm.

7. Utilisation d'au moins un fil tordu en polyamide 6.6 avec une finesse ≤ 312 dtex comme élément de résistance ou pour la fabrication de cordes de renforcement, dans laquelle chaque fil des cordes de renforcement se compose de polyamide 6.6, pour au moins une couche de nappe, qui recouvre la ceinture d'un pneumatique de véhicule à structure radiale.

8. Utilisation selon la revendication 7, **caractérisée en ce que** le fil présente une finesse de 312 dtex ou de 235 dtex.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007040674 A1
- EP 2781371 A
- GB 2172251 A1
- DE 102010017786 A1
- DE 102012017786 A1
- EP 1475248 B1
- WO 2012069955 A1